# EUROPEAN PATENT APPLICATION

(11) **EP 4 064 397 A1**
(43) Date of publication of application: **28.09.2022**
(21) Application number: 21164537.9
(22) Date of filing: 24.03.2021
(51) Int. Cl.: H01M 8/0273, H01M 8/0276, H01M 8/0284, H01M 8/0286, H01M 8/1004, H01M 8/1018

(54) **UNIT CELL ASSEMBLY FOR FUEL CELL STACK AND METHOD FOR MAKING THE SAME**

(71) Applicant: AVL List GmbH, 8020 Graz (AT); AVL Fuel Cell Canada Inc., Burnaby, British Columbia V5A4N8 (CA)
(72) Inventor: Gallagher, Emerson, Vancouver, British Columbia V6L2T5 (CA)
(74) Representative: Gamper, Bettina

(57) **Abstract**

Unit cell assemblies (70) for a solid polymer electrolyte fuel cell stack (40) and methods for making them are disclosed in which the assemblies are characterized in that the edge of a second gas diffusion layer is inboard of the coaligned edge of a first gas diffusion layer and a catalyst coated membrane assembly (2), and the second gas diffusion layer comprises an elastomeric seal attached at its edge and the seal comprises inboard and outboard sealing elements. The inboard and outboard sealing elements can effect respective seals between a flow field plate assembly (71) and the catalyst coated membrane assembly (2) and between the flow field plate assembly (71) and another flow field plate assembly (71) in an adjacent unit cell assembly (70) in the series stack (41) when compressed. The unit cell assembly (70) can be manufactured by appropriately bonding the first gas diffusion layer to the catalyst coated membrane assembly (2), attaching the elastomeric seal to the edge of the second gas diffusion layer, and appropriately locating both the second gas diffusion layer and a flow field plate assembly (71) comprising fuel and oxidant flow fields on opposite sides of the flow field plate assembly (71) adjacent the second gas diffusion layer.

## Description

This invention relates to unit cell assemblies for solid polymer electrolyte fuel cell stacks and to methods for making them. In particular, it relates to designs for efficient, simplified assembly and for effecting reliable seals.

Fuel cells electrochemically convert fuel and oxidant reactants, such as hydrogen and oxygen or air, to generate electric power. Solid polymer electrolyte fuel cells generally employ a proton conducting, solid polymer membrane electrolyte between cathode and anode electrodes. The electrodes typically comprise appropriate catalysts to promote the electrochemical reactions taking place at each electrode. A structure comprising a solid polymer membrane electrolyte sandwiched between these two electrodes is known as a membrane electrode assembly (MEA). In one common embodiment, the MEA comprises a catalyst coated membrane (CCM) and gas diffusion layers (GDLs) applied on each side of the CCM. In the CCM, appropriate catalyst compositions have been applied and bonded to either side of the membrane electrolyte. The GDLs are provided to improve both the distribution of the fluid reactants to the electrodes and the removal of fluid by-products from the electrodes.

In a typical solid polymer electrolyte fuel cell, flow field plates comprising numerous fluid distribution channels for the reactants are provided on either side of a MEA to distribute fuel and oxidant to the respective electrodes and to remove reaction by-products from the fuel cell. Water is the primary by-product in a cell operating on hydrogen and air reactants. Because the output voltage of a single cell is of order of 1V, a plurality of cells is usually stacked together in series for commercial applications in order to provide a higher output voltage. Fuel cell stacks can be further connected in arrays of interconnected stacks in series and/or parallel for use in automotive applications and the like.

Along with water, heat is a significant by-product from the electrochemical reactions taking place within the fuel cell. Means for cooling a fuel cell stack is thus generally required. Stacks designed to achieve high power density (e.g. automotive stacks) typically circulate liquid coolant throughout the stack in order to remove heat quickly and efficiently. To accomplish this, coolant flow fields comprising numerous coolant channels are also typically incorporated in the flow field plates of the cells in the stacks. The coolant flow fields are typically formed on the electrochemically inactive surfaces of both the anode side and cathode side flow field plates and, by appropriate design, a sealed coolant flow field is created when both anode and cathode side plates are mated together into a bipolar flow field plate assembly.

To efficiently manufacture such fuel cell stacks, numerous identical cell assemblies known as unit cell assemblies are usually prepared with an appropriate design such that they can simply be stacked, one on top of the other, to complete most of the assembly of the stack. Special end cell assemblies may be required at the ends of the stack to properly complete the assembly.

A typical unit cell assembly comprises a MEA (e.g. a CCM with GDLs applied on each side thereof) bonded to a bipolar flow field plate assembly. Various designs and assembly methods have been proposed in the art in order to achieve the numerous seals and bonds required in the fuel cell stack. In one approach, the unit cell assembly comprises a plastic film frame which is used in the MEA in to provide electrical isolation, mechanical alignment, and sealing functions. An elastomeric seal to provide a satisfactory seal near the edge of the unit cell assembly is applied to the bipolar flow field plate assembly using methods such as liquid injection molding (LIM), screen printing, dispensing, and so on. In one exemplary approach disclosed in DE102015201129, the unit cell assembly may comprise a plastic film frame, but an elastomeric seal to provide a satisfactory seal between unit cell assemblies is applied to the frame instead of the bipolar flow field plate.

Rather than using plastic film frames, other alternative approaches may employ flush cut MEAs in which the edges of the GDLs have been impregnated and sealed with elastomer, e.g. via a liquid injection mold process. For instance, US6423439B1 discloses flush cut MEA designs with liquid injection molded edge seals. This design offers certain advantages but it does require use of a very low process viscosity seal material because of the requirement for it to adequately penetrate and seal the GDL edges. US7226686 on the other hand discloses yet other embodiments using high viscosity seal material.

In another related approach, a LIM edge sealed, flush cut MEA may concurrently be LIM sealed to its associated flow field plate assembly. In this variation, a flow field plate assembly is loaded into a LIM tool, a flush cut MEA is placed on top thereof, and the LIM process joins the two together into a complete unit cell assembly.

US20110097647 discloses an alternative fuel cell seal structure which may be considered for use in a unit cell assembly. Here, the structure includes a GDL which is formed by a porous body and a gasket which is integrally formed with a peripheral edge of a GDL. The GDL includes a rubber impregnation portion and an impregnation stopping portion. The gasket is integrally formed with a gasket body portion having a thickness dimension larger than a thickness dimension of the GDL and an overlap portion overlapping with the GDL in a plane other than a portion impregnated by the GDL. The rubber impregnation portion of the GDL includes an inner portion which is provided between the impregnation stopping portion and an outer portion overlapping with the overlap portion of the gasket in a plane so as not to overlap with the gasket in a plane.

In another example, US9196911 discloses a gas diffusion layer-integrated gasket which includes a first gasket which is integrally molded to a periphery of a first gas diffusion layer and a second gasket which is integrally molded to a periphery of a second gas diffusion layer, and a hinge part which connects the first gasket and second gasket to each other. The first and second gas diffusion layers sandwich a membrane-electrode assembly in which catalytic electrode layers are provided on both surfaces of an electrolytic membrane from both sides, wherein a seal protrusion is formed on a surface which is in tight contact with the membrane-electrode assembly.

While a great deal of consideration has gone into developing unit cell assembly designs and methods for making them, there remains a continuing desire for additional simplification and efficiency in the manufacture of these parts.

The present invention includes novel unit cell assemblies for a solid polymer electrolyte fuel cell stack and improved methods for making them. Further, it includes fuel cell stacks which comprise a series stack of a plurality of these unit cell assemblies. The designs of the invention allow for efficient, simplified assembly and provide for reliable seals.

A unit cell assembly of the invention is for use as a repeating unit to create a series stack of fuel cells for a solid polymer electrolyte fuel cell stack. (The fuel cells at the end of such stacks are made somewhat differently.) The unit cell assembly comprises a catalyst coated membrane assembly comprising an anode catalyst layer, a cathode catalyst layer, and a solid polymer membrane electrolyte in which the anode and cathode catalyst layers are bonded to opposite sides of the solid polymer membrane electrolyte. The unit cell assembly also comprises first and second gas diffusion layers and a flow field late assembly. The first gas diffusion layer is bonded to the catalyst coated membrane assembly on a first side such that the edges of the first gas diffusion layer and the catalyst coated membrane assembly are coaligned. The second gas diffusion layer is located adjacent the second side of the catalyst coated membrane assembly. The flow field plate assembly comprises fuel and oxidant flow fields on opposite sides of the flow field plate assembly. In the present invention, the edge of the second gas diffusion layer is inboard of the coaligned edge of the first gas diffusion layer and the catalyst coated membrane assembly, and the second gas diffusion layer comprises an elastomeric seal attached at its edge and the elastomeric seal comprises inboard and outboard sealing elements. Further, the inboard sealing element is located inboard of the edge of the catalyst coated membrane assembly and between the flow field plate assembly and the second side of the catalyst coated membrane assembly such that the inboard sealing element can effect a seal between the flow field plate assembly and the second side of the catalyst coated membrane assembly when compressed. Still further, the outboard sealing element is located outboard of the coaligned edges of the first gas diffusion layer and the catalyst coated membrane assembly and adjacent the flow field plate assembly such that the outboard sealing element can effect a seal between the flow field plate assembly and another flow field plate assembly in an adjacent unit cell assembly in the series stack when compressed.

In an exemplary embodiment, the first gas diffusion layer can be a cathode gas diffusion layer and the second gas diffusion layer can be an anode gas diffusion layer. In addition, the inboard sealing element can comprise a bulb seal on the side of the elastomeric seal facing the flow field plate assembly, while the outboard sealing element can comprise a pair of bulb seals on opposite sides of the elastomeric seal.

The elastomeric seal used in the unit cell assembly can desirably be a liquid injection mold seal and comprising an elastomer having a viscosity greater than 100,000 mPa·s (e.g. certain elastomers selected from the group consisting of polyisobutylene, ethylene propylene diene monomer, silicone, polyolefin elastomer, and fluorocarbon rubber).

Another aspect of the invention includes a method of manufacturing the aforementioned unit cell assemblies in order to obtain reliable seals in a solid polymer electrolyte fuel cell stack comprising a series stack of solid polymer electrolyte fuel cells. The method comprises the steps of:
obtaining a catalyst coated membrane assembly comprising an anode catalyst layer, a cathode catalyst layer, and a solid polymer membrane electrolyte in which the anode and cathode catalyst layers are bonded to opposite sides of the solid polymer membrane electrolyte,
bonding a first gas diffusion layer to the catalyst coated membrane assembly on a first side such that the edges of the first gas diffusion layer and the catalyst coated membrane assembly are coaligned,
attaching an elastomeric seal comprising inboard and outboard sealing elements to the edge of a second gas diffusion layer,
locating the second gas diffusion layer adjacent the second side of the catalyst coated membrane assembly, and
locating a flow field plate assembly comprising fuel and oxidant flow fields on opposite sides of the flow field plate assembly adjacent the second gas diffusion layer.

In this method, the edge of the second gas diffusion layer is inboard of the coaligned edge of the first gas diffusion layer and the catalyst coated membrane assembly. Further, the inboard sealing element is located inboard of the edge of the catalyst coated membrane assembly and between the flow field plate assembly and the second side of the catalyst coated membrane assembly such that the inboard sealing element can effect a seal between the flow field plate assembly and the second side of the catalyst coated membrane assembly when compressed. And further still, the outboard sealing element is located outboard of the coaligned edges of the first gas diffusion layer and the catalyst coated membrane assembly and adjacent the flow field plate assembly such that the outboard sealing element can effect a seal between the flow field plate assembly and another flow field plate assembly in an adjacent unit cell assembly in the series stack when compressed.

In an exemplary embodiment, the step of attaching the elastomeric seal can comprise liquid injection molding. In the attaching step, the elastomeric seal does not have to substantially penetrate the edge of the second gas diffusion layer.

These and other aspects of the invention are evident upon reference to the attached Figures and following detailed description.
Figure 1a shows an exploded schematic view of a membrane electrode and frame assembly of a representative fuel cell stack.
Figure 1b shows a close-up side cross sectional view of the membrane electrode and frame assembly embodiment of Figure 1a in the vicinity of the framing film.
Figures 2a, 2b, 2c show the fuel flow field side of an anode flow field plate, the coolant side of an anode flow field plate, and the oxidant side of a cathode flow field plate respectively in bipolar plate assemblies used in a representative fuel cell stack.
Figure 3a shows an exploded view of a representative fuel cell stack.
Figure 3b shows a cross-sectional view of a complete removable load cell compression subassembly used in the representative fuel cell stack of Figure 3a.
Figure 3c shows the assembled representative fuel cell stack of Figure 3a.
Figure 4a shows an adjustable cell voltage pickup device suitable for use with the representative fuel cell stack of Figures 3a-3c.
Figure 4b shows a detailed view of a subassembly for the cell voltage pickup device of Figure 4a.
Figure 5 shows a partially exploded, close-up side cross sectional view of a unit cell assembly of the invention in the vicinity of the edge.

In this specification, words such as "a" and "comprises" are to be construed in an openended sense and are to be considered as meaning at least one but not limited to just one.

Herein, a "unit cell assembly" refers to an individual, generally planar, assembly which includes each component required to make up a single fuel cell in an associated fuel cell stack. A unit cell assembly is designed such that a plurality of them can simply be stacked to complete most of the assembly of the stack (the fuel cells at the ends of the stack being possible exceptions). Specifically herein, a unit cell assembly comprises a MEA (i.e. a CCM with GDLs applied on each side thereof) and a bipolar flow field plate assembly.

The term "coaligned" is used with regards to the edges of two or more components of a generally planar unit cell assembly. Such edges are coaligned when they terminate at essentially the same point in the planar direction.

The terms "inboard" and "outboard" are used to indicate the location of a first component with respect to a second component in the major planar direction of a generally planar unit cell assembly.

The term "bulb seal" refers to a sealing element with a rounded or bulb-like shape.

The term "does not substantially penetrate" is used in the context of the extent to which an elastomeric seal penetrates the edge of GDLs and/or the CCM in a unit cell assembly. It is not intended to exclude embodiments in which a modest amount of elastomeric seal material has penetrated one or more of these edges (e.g. inadvertently during manufacture). It is intended to exclude embodiments in which the penetration is sufficient and intended to provide acceptable seals at these edges.

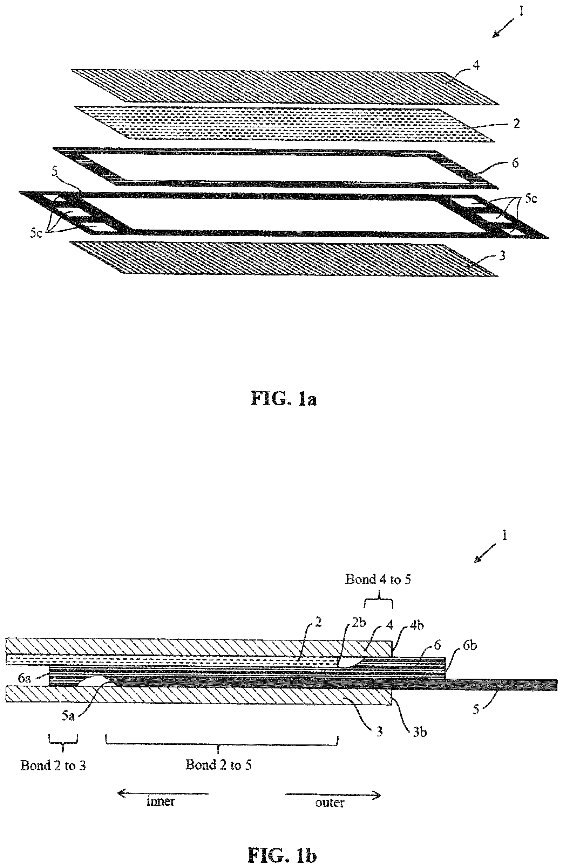

A representative fuel cell stack design reflecting the latest state of the art is shown in the following figures. In this design, a frame has been incorporated with the MEA components thereby creating a membrane electrode and frame assembly known as a MEFA. Figure 1a shows an exploded schematic view of the MEFA used in this representative fuel cell stack. This MEFA is additionally disclosed in PCT patent application serial number PCT/AT2021/060032, titled "Membrane Electrode And Frame Assembly For Fuel Cell Stacks And Method For Making", filed *29. January 2021* and which is hereby incorporated by reference in its entirety. Specifically, MEFA 1 comprises catalyst coated membrane assembly (CCM) 2, anode gas diffusion layer (anode GDL) 3, cathode gas diffusion layer (cathode GDL) 4, frame 5, and adhesive layer 6. CCM 2 comprises an anode catalyst layer, a cathode catalyst layer, and a solid polymer membrane electrolyte (not called out in Figure 1a). Any suitable CCM 2 may be considered, including window coated or non-window coated CCMs. The anode and cathode catalyst layers are bonded to opposite sides of the solid polymer membrane electrolyte and serve as the anode and cathode electrodes in MEFA 1. For instance, CCM 2 may comprise a cathode layer using carbon supported platinum catalyst (or alloys of platinum) with platinum loading of 200-400 µg/cm². CCM 2 may comprise an anode layer also using carbon supported platinum catalyst with platinum loading between 30 and 100 µg/cm². An additional oxygen evolution catalyst can also be added to the anode layer in the same loading range (30-100 µg/cm²) for reversal protection. The anode and cathode layers also include a proton conducting ionomer. The membrane electrolyte can range from 10-18 µm thick and is made of proton conducting polymer (e.g. Nafion^{™}) reinforced by a porous, nonreactive, mechanically-stable reinforcing layer.

Anode GDL 3 is located adjacent to the anode catalyst layer of CCM 2 and, in a like manner, cathode GDL 4 is located adjacent to the cathode catalyst layer of CCM 2. Frame 5 comprises numerous ports 5c for the fuel, oxidant, and coolant fluids supplied to and exhausted from the assembled fuel cell stack. Adhesive layer 6 is made of a material which can be activated so as to become sticky and to adhere to the various components in the MEFA thereby bonding them together. As shown, frame 5 and adhesive layer 6 are located between CCM 2 and anode GDL 3. In addition, adhesive layer 6 is located adjacent CCM 2 while frame 5 is located adjacent anode GDL 3.

In MEFA 1, anode and cathode GDLs 3 and 4 are similar in construction and made of carbon fibre paper (e.g. from Toray) with additives potentially incorporated to modify flow, electrical conductivity, and/or wettability. Frame 5 is typically made of a suitable polymeric material, such as a polyethylene naphthalate film. Adhesive layer 6 comprises polyethylene and curable cross-linking agents and the polymer is activated by melting the polyethylene and curing the cross-linking agents.

Figure 1b shows a close-up side cross sectional view of MEFA 1 in Figure 1a in the vicinity of adhesive layer 6. As shown in Figure 1b, the outer perimeter (not visible in Figure 1b) of frame 5 extends beyond outer perimeters 2b, 3b, 4b of all of CCM 2 and GDLs 3 and 4 respectively. (The outer and inner directions are indicated with arrows in the close-up view of Figure 1b.) Further as shown, outer perimeters 3b, 4b of both GDLs 3, 4 extend beyond outer perimeter 2b of CCM 2. Inner perimeter 6a of adhesive layer 6 extends beyond inner perimeter 5a of frame 5, and outer perimeter 6b of adhesive layer 6 extends beyond outer perimeter 2b of CCM 2 and also beyond outer perimeter 4b of GDL 4. Adhesive layer 6 is thus positioned so that it alone is capable of effecting bonds between cathode GDL 4 and frame 5 (denoted as "Bond 4 to 5" in Figure 1b), between CCM 2 and frame 5 (denoted as "Bond 2 to 5"), and between CCM 2 and anode GDL 3 (denoted as "Bond 2 to 3").

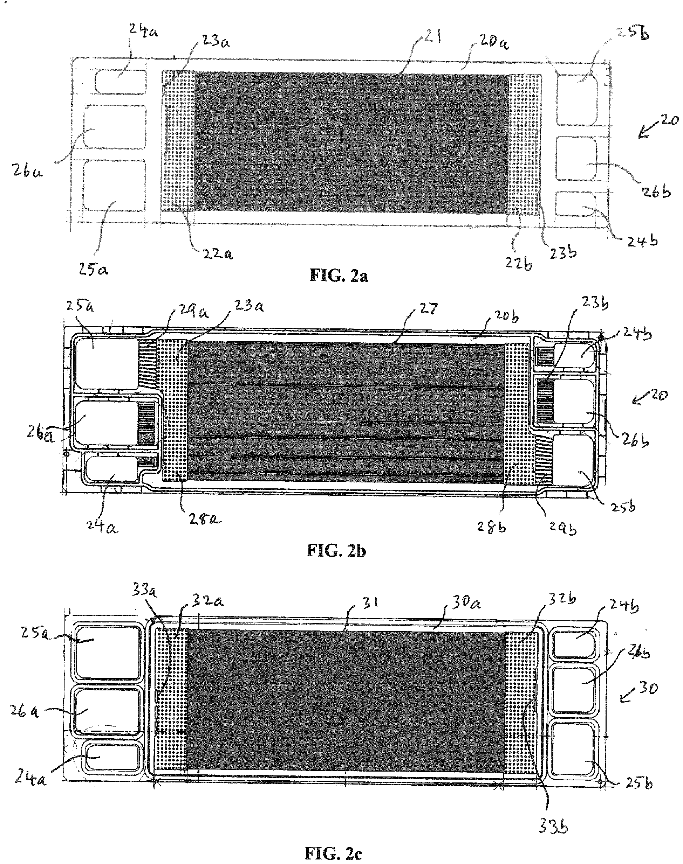

Rectangular, planar flow field plates are used in the aforementioned representative fuel cell stack which are made of compressed and impregnated expanded graphite into which various features have been formed or cut. Figures 2a-2c show several views of the major surfaces of these flow field plates.

Figure 2a shows the major surface 20a of fuel flow field plate 20 which is located immediately adjacent an opposing anode GDL 3. Fuel flow field 21 has been formed therein and comprises numerous parallel linear channels that are separated by landings (not called out individually in Fig. 2a) in order to fluidly access all of opposing anode GDL 3. At each end of fuel flow field 21 are inlet transition region 22a and outlet transition region 22b for distributing fuel thereto and collecting spent fuel therefrom respectively. Transition regions 22a and 22b comprise numerous pillars (not called out individually) to provide mechanical support over the areas they span. Inlet backfeed port 23a and outlet backfeed port 23b are provided in plate 20 to provide fluid access from fuel inlet port 24a and to fuel outlet port 24b respectively along opposite major surface 20b of plate 20 to each of transition regions 22a and 22b respectively. Also visible in Figure 2a are coolant inlet port 25a and coolant outlet port 25b as well as oxidant inlet port 26a and oxidant outlet port 26b.

Figure 2b shows the other major surface 20b of fuel flow field plate 20 opposite to that shown in Figure 2a. When mated to a counterpart surface of oxidant flow field plate 30, surface 20b serves to form coolant flow field 27. Coolant flow field 27 also comprises numerous parallel linear channels that are separated by landings (not called out individually in Fig. 2b) in order to evenly cool the whole fuel cell. Again, at each end of coolant flow field 27 are inlet transition region 28a and outlet transition region 28b for distributing coolant to and from coolant flow field 27. Again, these transition regions 28a and 28b comprise numerous pillars (not called out individually). Backfeed ports are not employed for coolant distribution and instead inlet channels 29a and outlet channels 29b are provided to fluidly connect coolant inlet port 25a and coolant outlet port 25b respectively to each of transition regions 28a and 28b respectively.

Next, Figure 2c shows the major surface 30a of oxidant flow field plate 30 which is located immediately adjacent an opposing cathode GDL 4. Oxidant flow field 31 has been formed therein and again comprises numerous parallel linear channels that are separated by landings (not called out individually in Fig. 2c) in order to fluidly access all of opposing cathode GDL 4. In a like manner to fuel flow field plate 20, at each end of oxidant flow field 31 are inlet transition region 32a and outlet transition region 32b for distributing oxidant thereto and collecting spent oxidant therefrom respectively. Transition regions 32a and 32b comprise numerous pillars (not called out individually) to provide mechanical support over the areas they span. Inlet backfeed port 33a and outlet backfeed port 23b are provided in plate 30 to provide fluid access from oxidant inlet port 26a and to oxidant outlet port 26b respectively along opposite major surface (not shown) of plate 30 to each of transition regions 32a and 32b respectively.

The other major surface of oxidant flow field plate 30 (i.e. opposite to that shown in Figure 2c) is essentially flat and featureless and is used as a surface against which surface 20b of fuel flow field plate 20 can seal to create a sealed coolant flow field between the two plates. Typically, pairs of these two plates are glued together appropriately in an early assembly step in order to form unitary bipolar plate assemblies.

In all instances, the dimensions of the channels and other features making up the various flow fields in the fuel cell stack are quite small and important for achieving proper performance. In the representative plates shown, the dimensions for instance for the fuel channel widths in fuel flow field 21 are about 0.48 mm and the coolant channel widths in coolant flow field 27 are about 0.54 mm, both with channel pitches of 1 mm and pillar diameters of 1.1 mm in the transition regions. The oxidant channel widths in oxidant flow field 31 are about 0.8 mm with pillar diameters of 1 mm in the transition regions.

Note that numerous seals are required to contain and separate the various fluids involved but to avoid clutter these have not been called out and/or shown in Figures 2a-2c.

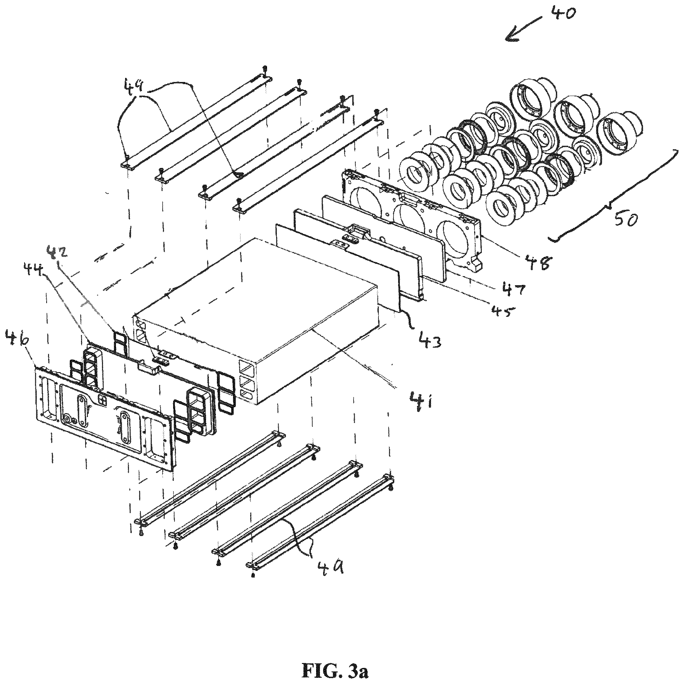

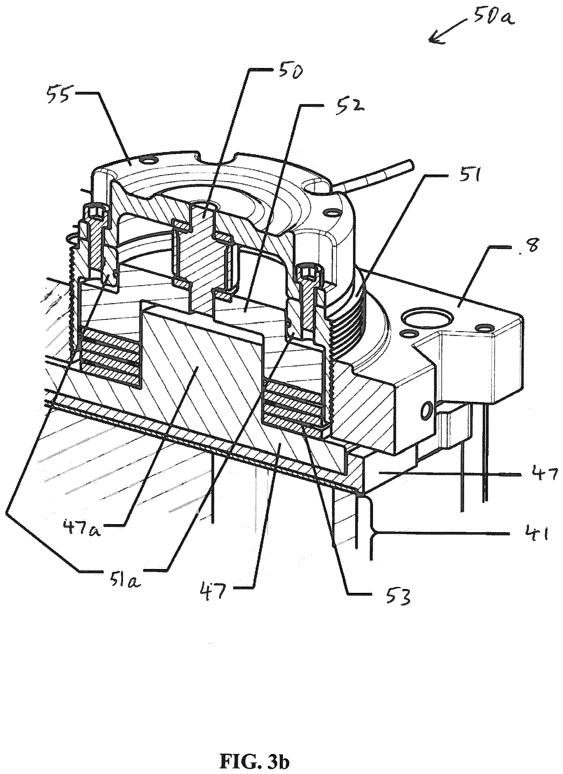

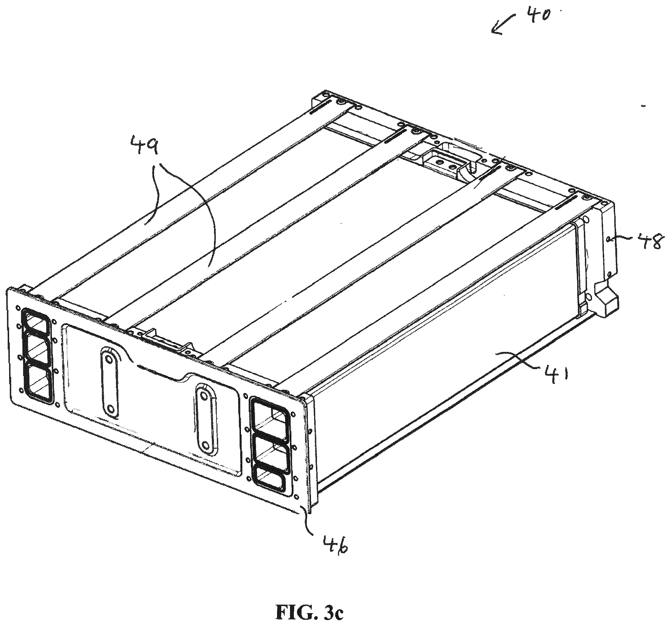

A plurality of the aforementioned MEFAs and bipolar plate assemblies are then used to assemble a series stack of fuel cells. Figure 3a shows an exploded view of a representative fuel cell stack comprising 316 such stacked fuel cells. Representative fuel cell stack 40 includes series stack 41 of the individual fuel cells. As shown, the endmost cathode (positive) end of the stack is leftmost in Figure 3. Fuel cell stack 40 also contains cathode and anode bus plates, 42 and 43 respectively, cathode and anode (electrical) isolator plates, 44 and 45 respectively, and cathode and anode load plates, 46 and 47 respectively. At the rightmost end is compression hardware including end plate 48 and a unique compression assembly 50 comprising three removable load cell compression subassemblies described in more detail below with regards to Figure 3b. Finally, also shown in Figure 3a is a set of eight straps 49 used to hold the stack together under a desired compression force.

Figure 3b shows a cross-sectional view of a complete removable load cell compression subassembly 50a in compression assembly 50. (This compression subassembly is additionally disclosed in European patent application serial number EP20187466.6, titled "Removable Load Cell Design For Fuel Cell Stack", and filed 23. July 2020 and which is hereby incorporated by reference herein in its entirety.) Compression subassembly 50a is shown in Fig. 3b with load cell 50 and load cell cap 55 incorporated. Load plate 47 is visible and serves as a compression surface to provide compressive force to series stack 41. Spring assembly 53, comprising a stack of disc springs, is also visible. Here, spring assembly 53 is located around a post 47a which is formed in and is a part of load plate 47. Spring assembly 53 engages with load plate 47 and urges it against series stack 41.

The simple arrangement and functioning of compression subassembly 50a is readily evident in Figure 3b. Load is applied to load plate 47 from the compression of the disc springs of spring assembly 53. Spring assembly 53 is in direct contact with load cell button 52, which in turn is in direct contact with load cell 50, which in turn is in direct contact with load cell cap 55. Load cell cap 55 is attached to spring cap 51 which in turn is attached to second end plate 48. In this configuration, load cell button 52 is slightly spaced away from inner shoulder 51a of spring cap 51. Here then, essentially all the load applied to compression plate 16 is transmitted though load cell 50 and thus load cell 50 can be used to provide a very accurate measure of the load applied.

On the other hand, with load cell 50 and load cell cap 55 removed, it is evident from Figure 3b that load cell button 52 would be pressed by spring assembly 53 so as to instead contact inner shoulder 51a. In this case then, with the load cell removed, essentially all the load applied to load plate 47 is instead transmitted to spring cap 51.

Figure 3c shows the assembled representative fuel cell stack 40 of Figure 3a.

Often associated with use of fuel cell stacks are devices and control apparatus for monitoring the individual voltages of each of the cells making up the entire series stack during operation of the stack. This real time information is used, for instance, to detect for failing cells, associated low relative operating voltages, and to prevent cells from undergoing voltage reversal which can result in permanent damage to the affected cells as well as to the overall stack.

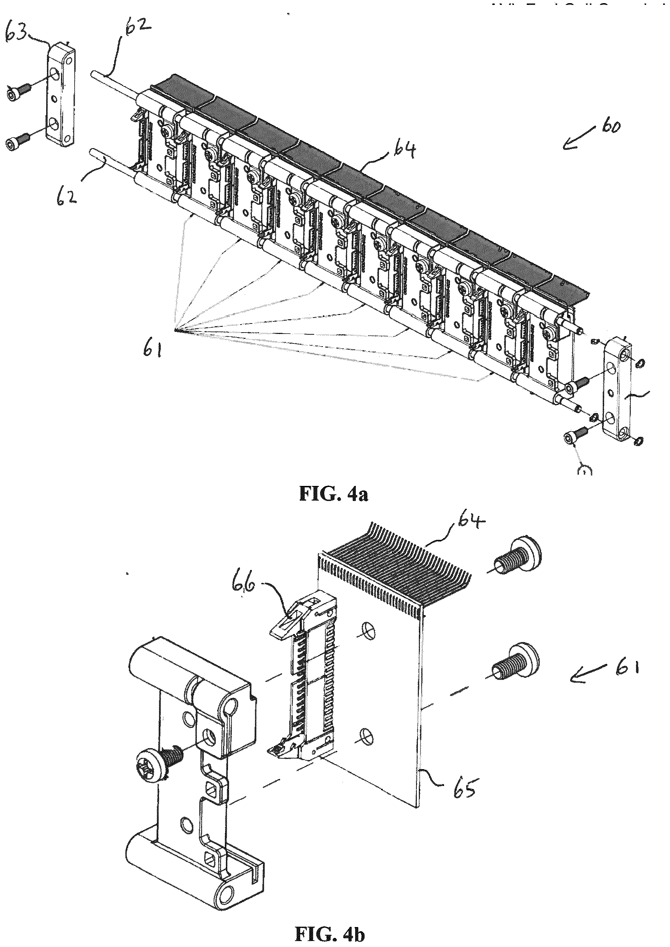

Figure 4a shows an adjustable cell voltage pickup (CVP) device suitable for use with the representative fuel cell stack 40 of Figures 3a-3c. As shown, CVP 60 comprises ten pickup subassemblies 61 which are slidably mounted on rails 62. End caps 63 secure subassemblies onto rails 62 and serve as mounts for mounting CVP 60 onto the side of the fuel cell stack (not shown in this figure). Figure 4b shows a more detailed view of a subassembly for this CVP. Each subassembly 61 comprises numerous individual pickups 64 mounted on board 65. Each pickup 64 flexibly electrically contacts an adjacent fuel cell in the stack. Contact from each pickup 64 is then routed to connector 66 and from there to appropriate multiplexing voltage monitoring and control apparatus (not shown). The sizes, spacings and tolerances of both the cells and the pickups are such that 32 pickups can comfortably be fixedly mounted in subassembly 61 so as to electrically contact 32 respective fuel cells in the stack without inadvertently contacting or shorting out something unwanted. And each individual subassembly 61 can be slidably adjusted along rails 62 such that its associated set of 32 pickups 64 is optimally located with respect to the cells in the stack.

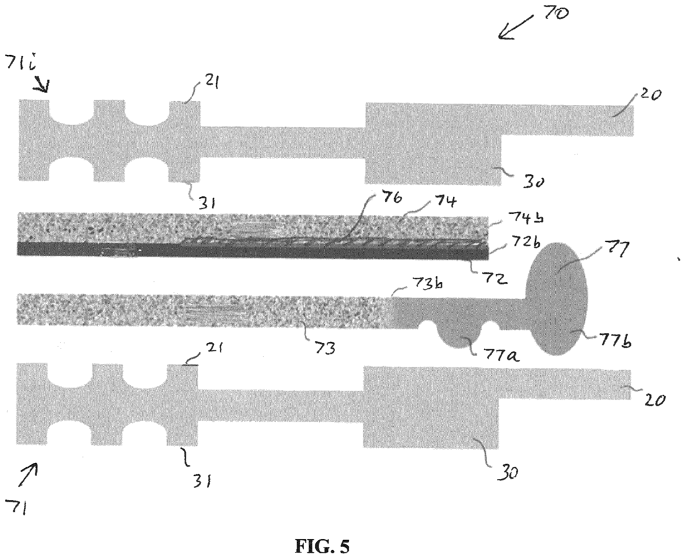

Turning to the present invention now, a partially exploded, close-up side cross sectional view of a unit cell assembly of the invention is shown in Figure 5 in the vicinity of the edge. (Note: the same numbering has been used for the CCM and bipolar plate assembly in this embodiment as were used in the embodiment of the preceding figures because they can be identical thereto. Similar, but not the same, numbering has been used for other components because certain other components are similar to, but not quite the same as those used in the previous embodiment.) Unit cell assembly 70 comprises CCM 72, bipolar flow field plate assembly 71 (comprising a bonded fuel flow field plate 20 and oxidant flow field plate 30), cathode GDL (gas diffusion layer) 74, anode GDL 73, elastomeric seal 77 and optional adhesive or thermoplastic diffusion barrier 76. Also shown for illustrative purposes in Figure 5 is a second bipolar flow field plate plate 71i which would be associated with an adjacent second unit cell assembly (not shown) in a fully assembled fuel cell stack.

In unit cell assembly 70, cathode GDL 74 is bonded to the cathode catalyst side of CCM 72 such that its edge 74b and edge 72b of CCM 72 are coaligned. Unit cell assembly 70 is unique in that the edge 73b of anode GDL 73 is inboard of the coaligned edges of the cathode GDL 74 and CCM 72, and further that anode GDL 73 comprises a distinct elastomeric seal 77 attached at its edge. Specifically, elastomeric seal 77 comprises inboard and outboard sealing elements 77a, 77b respectively. Further, inboard sealing element 77a is located inboard of the edge of CCM 72 and between flow field plate assembly 71 and the anode catalyst side of CCM 7 assembly such that it can effect a seal between flow field plate assembly 71 and the anode catalyst side of CCM 72 when compressed. Further still, outboard sealing element 77b is located outboard of the coaligned edges of cathode GDL 74 and CCM 72 and adjacent flow field plate assembly 71i such that it can effect a seal between flow field plate assembly 71 and adjacent flow field plate assembly 71i in the series stack when compressed.

Unit cell assemblies of the invention provide for reliable seals when stacked in series to make a solid polymer electrolyte fuel cell stack. As shown in Figure 5, a suitable shape for inboard sealing element 77a is one comprising a bulb seal on the side facing flow field plate assembly 71. In a like manner, a suitable outboard sealing element 77b is one comprising a pair of bulb seals on opposite sides of elastomeric seal 77.

Advantageously in the present invention it is not required for elastomeric seal to substantially penetrate the edge of anode GDL 73. Thus materials having a viscosity greater than 100,000 mPa·s (e.g. polyisobutylene, ethylene propylene diene monomer, silicone, polyolefin elastomer, fluorocarbon rubber, and so on) can be used for elastomeric seal 77. And further, elastomeric seal 77 can be attached by liquid injection molding (LIM) methods that are well known to those in the art (hence the elastomeric seal can be a LIM seal).

The method of manufacturing the unit cell assembly of Figure 5 can thus be quite simple and straightforward. A suitable CCM 72 is obtained and a desired cathode GDL 74 is bonded to its cathode catalyst side such that their edges are coaligned. Elastomeric seal 77 is attached to the edge of anode GDL 73 and located adjacent the anode catalyst side of CCM 72. And finally flow field plate assembly 71 is located adjacent anode GDL 73, all in the aforementioned configuration.

As mentioned, an advantage of the invention is that it allows for the use of high viscosity, long lifetime, and low permeability elastomers since it is not essential for elastomeric seal 77 to infiltrate anode GDL 73. For instance, higher process viscosity elastomer materials other than silicone can now be used if desired thereby eliminating any potential failures associated with the use of silicone in the fuel cell assemblies. Further, use of higher viscosity elastomer materials allow for easier flash control on the bipolar plate assembly. Still further, when LIM processing is employed, any scrap produced only involves a single lower cost GDL as opposed to the complete higher value MEA, and thereby minimizing the cost of any rejects at that process step. There is also no need to involve the flow field plates or flow field plate assembly in the LIM process, considerably simplifying the associated tooling involved as well as the process itself. Rather, elastomeric seal 77 only needs to be applied to one GDL.

Use of the invention eliminates any unsupported CCM (since it is always completely supported by a GDL) and thereby reduces the risk of catalyst not being electrically connected which in turn, when exposed to air and hydrogen, would drive membrane damaging reactions. Further, there may also be benefits to employing the separate bonded CCM/single GDL assembly shown in Figure 5 (instead of a fully bonded MEA or MEFA) for purposes of precious metal catalyst recycling since there is less additional material to separate therefrom. Further still, no frame materials (and associated waste) as shown in the design of Figure 1 are required. In addition, either of the bonded CCM/single GDL assembly or the other GDL with attached elastomeric seal can be individually replaced during a refurbishment process if desired to extend the service life of the fuel cell stack for minimal cost.

A yet further advantage of the present design is that the relatively small bulb shape of inner sealing element 77a applies elevated clamping loads to the edge of CCM 72 when compressed and thereby eliminates the risk of pullback of CCM 72 over time and/or use. It may also be advantageous in an alternative embodiment to incorporate an additional inboard bulb shaped feature on the CCM side of elastomeric seal 77 (e.g. on the side of elastomeric seal 77 directly opposite to inboard sealing element 77a shown in Figure 5) in order to increase the local applied pressure there and ensure no gas leakage between CCM 72 and elastomeric seal 77.

All of the above U.S. patents, U.S. patent application publications, U.S. patent applications, foreign patents, foreign patent applications and non-patent publications referred to in this specification, are incorporated herein by reference in their entirety.

While particular elements, embodiments and applications of the present invention have been shown and described, it will be understood, of course, that the invention is not limited thereto since modifications may be made by those skilled in the art without departing from the spirit and scope of the present disclosure, particularly in light of the foregoing teachings. Such modifications are to be considered within the purview and scope of the claims appended hereto.

## Claims

1. A unit cell assembly (70) for a solid polymer electrolyte fuel cell stack (40) comprising a series stack (41) of solid polymer electrolyte fuel cells, the unit cell assembly (70) comprising:
a catalyst coated membrane assembly (2) comprising an anode catalyst layer, a cathode catalyst layer, and a solid polymer membrane electrolyte wherein the anode and cathode catalyst layers are bonded to opposite sides of the solid polymer membrane electrolyte;
a first gas diffusion layer (3) bonded to the catalyst coated membrane assembly (2) on a first side and wherein the edges of the first gas diffusion layer (3) and the catalyst coated membrane (2) assembly are coaligned;
a second gas diffusion layer (4) located adjacent the second side of the catalyst coated membrane assembly (2); and
a flow field plate assembly (71) comprising fuel and oxidant flow fields on
opposite sides of the flow field plate assembly (71);
**characterized in that**:
the edge of the second gas diffusion layer (4) is inboard of the coaligned edge of the first gas diffusion layer (3) and the catalyst coated membrane assembly (2); and
the second gas diffusion layer (4) comprises an elastomeric seal attached at its edge and the elastomeric seal comprises inboard and outboard sealing elements wherein:
the inboard sealing element is located inboard of the edge of the catalyst coated membrane assembly (2) and between the flow field plate assembly (71) and the second side of the catalyst coated membrane assembly (2) such that the inboard sealing element can effect a seal between the flow field plate assembly (71) and the second side of the catalyst coated membrane assembly (2) when compressed; and
the outboard sealing element is located outboard of the coaligned edges of the first gas diffusion layer (3) and the catalyst coated membrane assembly (2) and adjacent the flow field plate assembly (71) such that the outboard sealing element can effect a seal between the flow field plate assembly (71) and another flow field plate assembly (71) in an adjacent unit cell assembly (70) in the series stack (41) when compressed.

2. The unit cell assembly (70) of claim 1 wherein the first gas diffusion layer (3) is a cathode gas diffusion layer (4) and the second gas diffusion layer (4) is an anode gas diffusion layer (3).

3. The unit cell assembly (70) of claim 1 wherein the inboard sealing element comprises a bulb seal on the side of the elastomeric seal facing the flow field plate assembly (71).

4. The unit cell assembly (70) of claim 1 wherein the outboard sealing element comprises a pair of bulb seals on opposite sides of the elastomeric seal.

5. The unit cell assembly (70) of claim 1 wherein the elastomeric seal is a liquid injection mold seal.

6. The unit cell assembly (70) of claim 1 wherein the elastomeric seal comprises an elastomer having a viscosity greater than 100,000 mPa·s.

7. The unit cell assembly (70) of claim 6 wherein the elastomeric seal is an elastomer selected from the group consisting of polyisobutylene, ethylene propylene diene monomer, silicone, polyolefin elastomer, and fluorocarbon rubber.

8. A solid polymer electrolyte fuel cell stack (40) comprising a series stack (41) of a plurality of solid polymer electrolyte fuel cells comprising a plurality of the unit cell assemblies of claim 1

9. A method of manufacturing a unit cell assembly (70) for obtaining reliable seals in a solid polymer electrolyte fuel cell stack (40) comprising a series stack (41) of solid polymer electrolyte fuel cells, the method comprising:
obtaining a catalyst coated membrane assembly (2) comprising an anode catalyst layer, a cathode catalyst layer, and a solid polymer membrane electrolyte wherein the anode and cathode catalyst layers are bonded to opposite sides of the solid polymer membrane electrolyte;
bonding a first gas diffusion layer (3) to the catalyst coated membrane assembly (2) on a first side such that the edges of the first gas diffusion layer (3) and the catalyst coated membrane assembly (2) are coaligned;
attaching an elastomeric seal comprising inboard and outboard sealing elements to the edge of a second gas diffusion layer (4);
locating the second gas diffusion layer (4) adjacent the second side of the catalyst coated membrane assembly (2); and
locating a flow field plate assembly (71) comprising fuel and oxidant flow fields on opposite sides of the flow field plate assembly (71) adjacent the second gas diffusion layer (4);
wherein:
the edge of the second gas diffusion layer (4) is inboard of the coaligned edge of the first gas diffusion layer (3) and the catalyst coated membrane assembly (2);
the inboard sealing element is located inboard of the edge of the catalyst coated membrane assembly (2) and between the flow field plate assembly (71) and the second side of the catalyst coated membrane assembly (2) such that the inboard sealing element can effect a seal between the flow field plate assembly (71) and
the second side of the catalyst coated membrane assembly (2) when compressed; and
the outboard sealing element is located outboard of the coaligned edges of the first gas diffusion layer (3) and the catalyst coated membrane assembly (2) and adjacent the flow field plate assembly (71) such that the outboard sealing element can effect a seal between the flow field plate assembly (71) and another flow field plate assembly (71) in an adjacent unit cell assembly (70) in the series stack (41) when compressed.

10. The method of claim 9 wherein the step of attaching the elastomeric seal comprises liquid injection molding.

11. The method of claim 10 wherein the elastomeric seal does not substantially penetrate the edge of the second gas diffusion layer (4).
